# EUROPEAN PATENT SPECIFICATION

(11) **EP 0 461 224 B1**
(45) Date of publication and mention of the grant of the patent: **11.09.1996**
(21) Application number: 91900956.3
(22) Date of filing: 28.12.1990
(51) Int. Cl.: C08F 8/32, C08F 8/48

(54) **A PROCESS FOR THE PREPARATION OF HEAT RESISTANT AND TRANSPARENT ACRYLIC RESIN**
VERFAHREN ZUR HERSTELLUNG VON HITZEBESTÄNDIGEM UND TRANSPARENTEM ACRYLHARZ
PROCEDE DE PREPARATION D"UNE RESINE ACRYLIQUE TRANSPARENTE ET RESISTANTE A LA CHALEUR

(30) Priority: 29.12.1989 KR 2019489; 30.12.1989 KR 2034589; 13.08.1990 KR 1245290; 13.08.1990 KR 1245490; 13.08.1990 KR 1245390
(43) Date of publication of application: 18.12.1991
(73) Proprietor: LUCKY LTD., Seoul 1050-010 (KR)
(72) Inventor: KIM, Jin, Baek 6-304, Lucky Apt., Youseong-gu Daejeon-si 202-343 (KR); HUR, Young, Sam 3-201, Sinseong Apt., Seo-gu Daejeon-si 202-343 (KR)
(74) Representative: Abnett, Richard Charles
(86) International application number: PCT/KR90/00023
(87) International publication number: WO 91/09886

(56) References cited:
- EP-A- 0 234 726
- EP-A- 0 315 150
- EP-A- 0 358 093
- DE-A- 3 223 847
- GB-A- 1 559 132
- US-A- 2 146 209
- US-A- 3 284 425
- US-A- 4 169 924
- US-A- 4 246 374
- US-A- 4 816 524

## Description

### Detailed description of the invention

The present invention relates to a process for the preparation of heat resistant and transparent acrylic resin. More particularly, it relates to a process for the preparation of transparent acrylic resin which is improved in heat resistance by introducing imide structure into acrylic polymers in the presence of a catalyst.

Up to date, since methylmethacrylate resin has had good transparency, weatherability and mechanical properties, it has been used in highly efficient optical materials, decorative materials, automobiles and electric products. However, having low heat deflection temperature of less than 100°C, methylmethacrylate resin has not been used in the field of requiring heat resistance. Therefore, we have required its heat resistance improved.

In general the method to improve the heat resistance of acrylic resin is as follows;
1) the method of heating react acrylic acid, methacrylic acid or their ester polymer with a primary amine in a solvent having a high boiling point (USP No. 2,146,209),
2) the method of reacting methylmethacrylate polymer with a primary amine in the presence of water (USP No. 3,234,425),
3) the method of reacting acrylic polymer with anhydrous ammonia or anhydrous primary azine in a extruder (USP No. 4,246,374), and
4) the method of reacting methacrylate resin with anhydrous ammonia or an anhydrous primary amine in the presence of a solvent (JP 63-36696).

EP 0 315 150 discloses imidized acrylic polymers and a process for the production thereof. The process includes reacting an acrylic resin in the molten state or dissolved in a solvent at a temperature between 200-350°C with at least one modifier of the formula 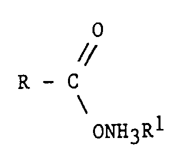 wherein R and R¹ are the same or different and are hydrogen, an alkyl, cycloalkyl, aryl, alkylaryl or arylalkyl radical having from 1 to 20 carbon atoms optionally substituted with heteroatoms. Further, the process can be carried out in the presence of tertiary amines.

According to the above-mentioned method (1), it is difficult to separate solvents completely from the imidized polymer product on a commercial scale, because the boiling point of the solvent is high. Therefore, since the obtained imidized polymer is colored, the transparency of final product is deteriorated.

Also, as the imidization reaction according to the above-mentioned method (2) is carried out by using a great quantity of water as a dispersion medium, water phase and polymer phase are separated. Accordingly, it is difficult to obtain uniform imidized polymer. As the reaction is carried out at higher than the softening temperature of acrylic polymer, reaction product coagulates around agitator and handling of the reaction product is difficult.

Also, according to the above-mentioned method (3) it is difficult to obtain uniform imidized polymers, because polymers having high viscosity arereacted with gaseous primary amines.

Also, according to the above-mentioned method (4), it is required to remove moisture from acrylic polymers, solvents and amines in order to prevent hydrolysis.

Therefore, the present inventors investigated a process assiduously to improve the above-mentioned problems. We could produce acrylic resin having heat resistance and transparency through the following methods.

The object of the present invention is to provide a process for the preparation of acrylic resin which has excellent heat resistance and transparency and maintains all of the good original characteristics of acrylic resin.

The present invention is a process for the preparation of a heat resistant and transparent acrylic resin which is characterized by reacting acrylic resin with a primary amine as an imidizing material or ammonium compounds generating a primary amine, in the presence of 5-20% by weight water and 0.01-15% by weight of the compound of formula (IV) as a catalyst at a temperature of 100 to 350°C in a solvent which dissolves acrylic resin and imidized products:

R₄NOH (IV)

wherein R represents a hydrogen atom, unsubstituted and substituted alkyl of C₁ to C₂₀, cycloalkyl, aryl, aralkyl, alkaryl, group or mixtures thereof.

Namely, poly(methyl methacrylate) (PMAA) reacts with ammonium compounds generating primary amine such as ammonium bicarbonate of the formula (II) in the presence of solvent at 180∼350°C in order to introduce imide structure into PMMA. Consequently, the obtained methacrylimide group containing polymer of the formula (I) comprises more than 10% by weight of imidized structure unit, preferably, more than 20% by weight.

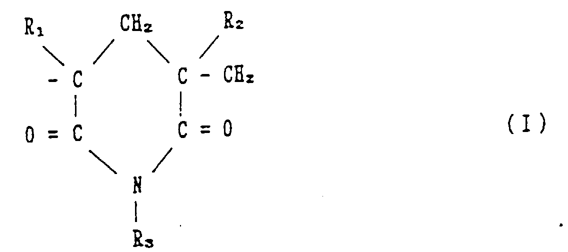

RNH₃HCO₃ (II)

wherein R₁, R₂ and R₃ independently represent a hydrogen atom, or unsubstituted and substituted C₁ to C₂₀ alkyl, cycloalkyl, aryl, aralkyl, alkaryl, or mixtures thereof, with the proviso that R₃ is not hydrogen.

Methacrylimide group containing polymer of the present invention is what introduces methacrylimide (dimethylglutarimide) structure into the side chain of acrylic resin. Suitable acrylic polymers introducing imide structure are methylmethacrylate polymer and methylmethacrylate-ethylenic unsaturated monomer copolymer, in which methacrylic acid ester, acrylic acid ester, styrene or α-methylstyrene or maleic anhydride is used as an ethylenic unsaturated monomer. Methacrylic resin used in producing methacylic copolymer is preferably methylmethacrylate homopolymer, methylmethacylate-methylacylate copolymer, methylmethacylate-styrene copolymer, and methylmethacyhate-styrene-maleic anhydride copolymer. Though the amount methylmethacylate structure unit comprised in the above-mentioned copolymer is not fixed, it is preferably at least 50% by weight.

Methylmethacrylate, ethylmethacrylate, propylmethacrylate, n-butylmethacrylate, isobutylmethacrylate, t-butylmethacrylate, cyclohexyl methacrylate, benzyl methacrylate, arylmethacrylate are methacrylic acid esters. Methylacrylate, ethylacrylate, propylacrylate, n-butylacrylate, isobutyl acrylate, t-butylacrylate, cyclcohexylacrylate, benzylacrylate, and arylacrylate are acrylic acid esters. PMAA among the esters is preferable from a transparent and imidization reactionary point of view.

The solvent used in the present invention should not obstruct the imidization reaction. Moreover, the solvent which can dissolve both acrylic polymers and imidized products is essentially required. Also, if the boiling point of a solvent is high, it is be too difficult to remove it after reaction. Oppositely, if the boiling point of a solvent is low, the pressure would rise, therefore, the boiling point of the solvent is preferably 50∼160°C.

The solvent dissolving methylmethacrylate polymer is preferably an aromatic hydrocarbon compound such as benzene, toluene and xylene, a ketone such as methylethyl ketone, ether such as ethyleneglycol dimethylether, diglyme, dioxane and tetrahydrofuran or an alcohol such as methyl alcohol, ethyl alcohol, isopropyl alcohol and butyl alcohol, dimethylformamide, dimethylsulfoxide and dimethylacetamide. The solvent may be a single compound or a mixture.

On the one hand the primay amine of the following formula (III) as imidizing agent to imidize methylmethacrylate polymer is methyl amine, ethyl amine, n-propyl amine, n-butyl amine, heptyl amine, hexy amine, cyclohexyl amine, octyl amine, nonyl amine, decyl amine, dodecyl amine, hexadecyl amine, octadecyl amire, isobutyl amine, sec-butyl amine, t-butyl anine, isopropyl amine, 2-ethylhexyl amine, 2-phenylethyl amine, aryl amine, alanine, benzylamine, parachlorobenzylamine, dimethoxyphenylethyl amine, aniline, bromoaniline, dibromoanilin, tribromoaniline, chloroaniline, dichloroaniline and trichloroaniline, the compounds are gaseous or liquid when the above reaction is carried out. The solid ammonium bicarbonate or compounds of formula (III) may be used simply and the handling of the compounds is easy industrially.

RNH₂ (III)

wherein R represents an unsubstituted and substituted C₁ to C₂₀ alkyl, cycloalkyl, aryl, aralkyl, alkaryl, or mixtures theirof.

The temperature to react methylmethacrylate resin with imidizing agent is preferably 180 ∼ 350°C, more preferably, 200 ∼ 300°C. If, the reaction temperature exceeded 350°C, methylmethacrylate polymer decomposed. Oppositely, if the reaction temperature were less than 180°C, the reaction rate remarkablely decreases so that the imidization process takes a long time.

According to the invention 5 to 20% by weight of water is added as an imidization reaction promoter.

We found that one of the reaction promoter used in the present invention is water. If the suitable amount of water was added to the reaction system, it operated as a catalyst and the reaction is well carried

The present invention has the advantage that improved heat resistance is obtained by increasing the degree of the imidization in the presence of a suitable amount of water. Moreover, since water increases the solubility in the reaction system, reactivity of the imidization reaction is increased in case that ammonium compounds generating primary amine are used. Accordingly, when methylmethacrylimide polymer is procduced, 5 to 20% by weight of water, desirably, to 15% by weight is added to the reaction system.

In the case that the amount of water is less than 5% by weight. heat resistance is decreased by decreasing reactivity. Oppositely, in the case that the amount of water is more than 20% by weight, heterogeneous imidized polymer is obtained by separating water phase and polymer phase, and the products are coagulated around reactor axis.

According to the present invention 0.01 to 15% by weight of tetraalkylammonim hydroxide of the formula (IV) is added.

R₄NOH (IV)

wherein R represents a hydrogen atom, or unsubstituted and substituted C₁ to C₂₀ alkyl, cycloalkyl, aryl, aralkyl, alkaryl, or mixtures thereof.

The catalyst used in the reaction is desirably tetraalkylamonium hydroxide, such as tetramethylamoniun hydroxide pentahydrate, tetraethylammonium hydroxide. Since tetraalkylammonium hydroxide is operated as a basic catalyst it the reaction system, the degree of imidization is increased. Improved transparent and heat resistant acrylic resins may be produced because da reaction conditions (e.g. reaction temperature and pressure) are mild. Besides, tetraalkylammonium hydroxide is decomposed into trialkyl amine and alcohol by heating, it is easily separated from polymer products.

When methylmethacrylimide polymer is produced, the amount of tetraalkylammonium hydroxide is 0.01 to 15% by weight, more desirably 0.1 to 7% by weight. If the amount of tetraalkylmmonium hydroxide is less than 0.01% by weight, catalytic effect is not significant

Oppositely, if the above-mentioned amount is more than 15% by weight, the material properties of products are deteriorated.

Also, the present invention is a process for the preparation of a methacrylimide group containing polymer in which acrylic resin is reacted in the presence of a suitable solvent with primary amine or compounds generating a primary amine at 100 ∼ 350°C by adding 0.01 to 15% by weight of tetraalkylammonium hydroxide of the above mentioned formula (IV) and 5 to 20% by weight of water. The polymer comprises lore than 5% by weight of methacrylimide.

The acrylic resin obtained in the present invention has characteristics that heat resistance and transparency are excellently improved and maintains original good optical and mechanical properties, weatherability, molding processibility and productivity.

The material properties of the polymer according to the present invention were measured in compliance with the following.
1) the confirmation of imidization of the polymer
   It is measured with potassium bromide (KBr) pellet by using infrared spectrometer (BIORAD, FTIR).
2) the degree of imidization of polymer(%).
   It is measured by the amount of nitrogen measured by elementary analyis (PERKIN ELMER MODEL: 240B).
3) heat resistance
   It is measured by glass transition temperature (Dupont Model: 1090). The more detailed description of the present invention in compliance with examples is as follows.

### Example 1

To 1.81-autoclave 100 parts by weight of methylmethacrylate polymer [Lucky Ltd., IH-830], 14 parts by weight of methylamine as an imidizing agent, 7 parts by weight of tetramethylamonium hydroxide pentahydrate as a catalyst, 19 parts by weight of distilled water, 455 parts by weight of tetrahydrofuran and 55 parts by weight of methyl alcohol as a mixed solvent were added, and then the reaction mixture was dissolved by agitating (250 rpm), reacted at 170°C for 3 hours (inner pressure; 3.87 x 10⁵ kg/m² (550 psi)).
After the reaction was completed, the solution of methylmethacrylimide group containing polymer was reprecipitated in n-hexane, filtrated and dried sufficiently in vacuum oven at 100°C, to obtain the polymer as a white powder. The obtained polymer was measured with infrared spectrometer, to obtain the data of 1680cm⁻¹ 1700cm⁻² and 1720cm⁻¹ which were characteristic bands of methylmethacrylimide stucture. The material properties of the above polymer were represented in table 1.

### Example 2

Following the procedure of the Exemple 1, except for 190°C as reaction temperature, to obtain the polymer. The material properties of the polymer were represented in table 1.

### Example 3

Following the procedure of the Example 15, except for 210°C as reaction temperature, to obtain the polymer. The material properties of the polymer were represented in table 1.

### Comparative Example 1

Following the procedure of the Example 1, except for not using catalyst to obtain the polymer. The material properties of the polymer were represented in table 1.

### Comparative Example 2

Following the procedure of the Example 1, except for not using catalyst and 190°C as reaction temperature, to obtain the polymer. The material properties of the polymer were represented in table 1.

### Comparative Example 3

Following the procedure of the Example 1, excepts for not using catalyst and 210°C as reaction temperature, to obtain the polymer. The material properties of the polymer were represented in table 1.

**Table 1**

| | Examples | | | Comparative Examples | | |
|---|---|---|---|---|---|---|
| | 1 | 2 | 3 | 1 | 2 | 3 |
| MMA polymer | 100 | 100 | 100 | 100 | 100 | 100 |
| methyl amine | 14 | 14 | 14 | 14 | 14 | 14 |
| tetramethyl ammonium | 7 | 7 | 7 | - | - | - |
| hydroxide pentahydrate water | 19 | 19 | 19 | 19 | 19 | 19 |
| tetrahydrofuran | 455 | 455 | 455 | 455 | 455 | 455 |
| methyl alcohol | 55 | 55 | 55 | 55 | 55 | 55 |
| the degree of imidization (%) | 13.3 | 17.5 | 23.8 | 4.7 | 9.8 | 21.6 |
| N content (%) | 1.71 | 2.19 | 2.87 | 0.63 | 1.28 | 2.64 |
| glass transition temperature (%) | 129 | 134 | 140 | 117 | 123 | 138 |

## Claims

1. A process for the preparation of heat resistant and transparent acrylic resin which is characterized by reacting acrylic resin with a primary amine as an imidizing material or ammonium compounds generating a primary amine, in the presence of 5 ∼ 20% by weight water and 0.01 - 15% by weight of the compound of formula (IV) as a catalyst at a temperature of 100 to 350°C in a solvent which dissolves acrylic resin and imidized products:
R₄NOH (IV)
wherein R represents a hydrogen atom, unsubstituted and substituted alkyl of C₁ to C₂₀, cycloalkyl, aryl, aralkyl, alkaryl group or mixtures thereof.

2. The process according to ciaim 1, wherein the ammonium compounds generating primary amine are 1,3-dimethyl urea, 1,3-diethyl urea or the ammonium bicarbonate of the following formula (II):
RNH₃HCO₂ (II)
wherein R represents an unsubstituted and substituted alkyl of C₁ to C₂₀ cycloalkyl, aryl, aralkyl, alkaryl group or mixtures thereof.

3. The process according to claim 2 which is characterized by reacting acrylic resin with the ammonium carbonates of formula (II).

4. The process according to claim 1, 2 or 3, wherein the reaction product is the compound of the following formula (I) comprising more than 5% by weight of imidized structure unit: 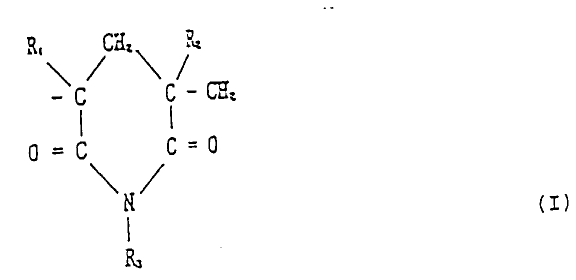 wherein R₁, R₂ and R₃ independently represent a hydrogen atom, unsubstituted and substituted alkyl of C₁ to C₂₀, cycloalkyl, aryl, aralkyl, alkaryl group or mixtures thereof with the proviso that R₃ is not hydrogen.

5. The process according to claim 1, 2, 3 or 4, wherein the acrylic resin is methylmethacrylate polymer or methylmethacrylate-ethylenic unsaturated monomer copolymer.

6. The process according to claim 5, wherein the methylmethacrylateethylenic unsaturated monomer copolymer comprises more than 50% by weight of methylmethacrylate structure unit.

7. The process according to claim 1, 2, 3 or 4, wherein the primary amine is the compound of the following formula (III).
R NH₂ (III)
wherein R represents an unsubstituted and substituted alkyl of C₁ to C₂₀, cycloalkyl, aryl, aralkyl, alkaryl group or mixtures thereof.

8. The process according to claim 1, 2, 3 or 4, wherein the solvent is one or a mixture of those selected from the group consisting of benzene, toluene, xylene, methylethylketone, ethylenglycol dimethylether, diglyme, dioxane, tetrahydrofuran, dimethylformamide, dimethyl sulfoxide, dimethylacetamide, methyl alcohol, ethyl alcohol, isopropyl alcohol and butyl alcohol, having the boiling points of the range of 50 to 160 C.

## Patentansprüche

1. Verfahren zur Herstellung von wärmebeständigem und transparentem Acrylharz, das durch Umsetzen von Acrylharz mit einem primären Amin als Imidisierungsmaterial oder mit Ammoniumverbindungen, die ein primäres Amin erzeugen, in Gegenwart von 5 bis 20 Gew.% Wasser und 0,01 bis 15 Gew.% der Verbindung der Formel (IV) als Katalysator bei einer Temperatur von 100 bis 350°C in einem Lösungsmittel, das Acrylharz und imidisierte Produkte auflöst:
R₄NOH (IV)
worin R ein Wasserstoffatom, eine unsubstituierte und substituierte C₁-C₂₀-Alkyl-, Cycloalkyl-, Aryl-, Aralkyl-, Alkarylgruppe oder Gemische derselben darstellt,
charakterisiert ist.

2. Verfahren nach Anspruch 1, in dem die Ammoniumverbindungen, die primäres Amin erzeugen, 1,3-Dimethylharnstoff, 1,3-Diethylharnstoff oder das Ammoniumbicarbonat der folgenden Formel (II) sind:
RNH₃HCO₃ (II)
worin R eine unsubstituierte und substituierte C₁-C₂₀-Alkyl-, Cycloalkyl-, Aryl-, Aralkyl-, Alkarylgruppe oder Gemische derselben darstellt.

3. Verfahren nach Anspruch 2, das durch Umsetzen von Acrylharz mit den Ammoniumcarbonaten der Formel (II) gekennzeichnet ist.

4. Verfahren nach Anspruch 1, 2 oder 3, in dem das Reaktionsprodukt die Verbindung der folgenden Formel (I) ist, die mehr als 5 Gew.% imidisierte Struktureinheit enthält: 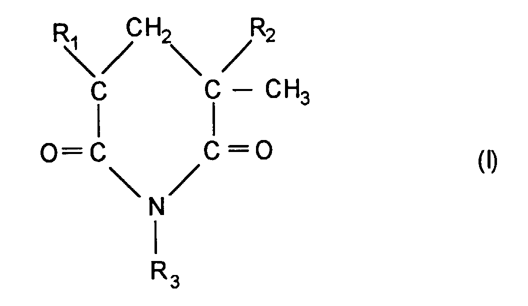 worin R₁, R₂ und R₃ unabhängig voneinander ein Wasserstoffatom, eine unsubstituierte und substituierte C₁-C₂₀-Alkyl-, Cycloalkyl-, Aryl-, Aralkyl-, Alkarylgruppe oder Gemische derselben darstellen, vorausgesetzt, daß R₃ nicht Wasserstoff ist.

5. Verfahren nach Anspruch 1, 2, 3 oder 4, in dem das Acrylharz Methylmethacrylatpolymer oder Methylmethacrylat-ethylenartig ungesättigtes Monomer-Copolymer ist.

6. Verfahren nach Anspruch 5, in dem das Methylmethacrylat-ethylenartig ungesättigtes Monomer-Copolymer mehr als 50 Gew.% Methylmethacrylat-Struktureinheit enthält.

7. Verfahren nach Anspruch 1, 2, 3 oder 4, in dem das primäre Amin die Verbindung der folgenden Formel (III) ist:
R NH₂ (III)
in der R eine unsubstituierte und substituierte C₁-C₂₀-Alkyl-, Cycloalkyl-, Aryl-, Aralkyl-, Alkarylgruppe oder Gemische derselben darstellt.

8. Verfahren nach Anspruch 1, 2, 3 oder 4, in dem das Lösungsmittel ein Lösungsmittel oder ein Gemisch der Lösungsmittel, das (die) aus der aus Benzol, Toluol, Xylol, Methylethylketon, Ethylenglycoldimethylether, Diglym, Dioxan, Tetrahydrofuran, Dimethylformamid, Dimethylsulfoxid, Dimethylacetamid, Methylalkohol, Ethylalkohol, Isopropylalkohol und Butylalkohol bestehenden Gruppe ausgewählt ist (sind) und die Siedepunkte im Bereich zwischen 50 und 160°C haben.

## Revendications

1. Un procédé de préparation de résine acrylique transparente et résistante à la chaleur, caractérisé en ce que l'on fait réagir une résine acrylique avec une amine primaire en tant que substance imidifiante ou des dérivés d'ammonium libérant une amine primaire, en présence de 5 à 20% en poids d'eau et de 0,01 à 15% en poids d'un composé de formule (IV) en tant que catalyseur, à une température de 100 à 350°C, dans un solvant qui dissout la résine acrylique et les produits imidifiés:
R₄NOH (IV)
dans laquelle R représente un atome d'hydrogène, un groupe alkyle en C₁ à C₂₀, cycloalkyle, aryle, aralkyle, ou alkaryle, substitué ou non substitué, ou leurs mélanges.

2. Le procédé selon la revendication 1, dans lequel les dérivés ammonium libérant une amine primaire sont la 1,3-diméthylurée, la 1,3-diéthylurée ou le bicarbonate d'ammonium de formule suivante (II):
RNH₃HCO₃ (II)
dans laquelle R représente un groupe alkyle en C₁ à C₂₀, cycloalkyle, aryle, aralkyle, ou alkaryle, substitué ou non substitué, ou leurs mélanges.

3. Le procédé selon la revendication 2, caractérisé en ce que l'on fait réagir la résine acrylique avec les carbonates d'ammonium de formule (II).

4. Le procédé selon la revendication 1, 2 ou 3, dans lequel le produit réactionnel est le dérivé de formule (I) suivant comprenant plus de 5% en poids de motifs structuraux imidifiés: 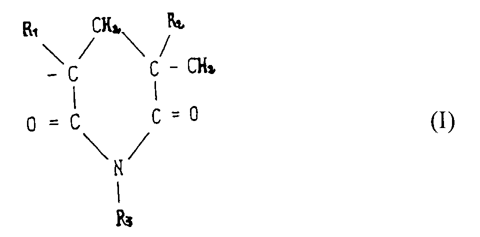 dans laquelle R₁, R₂ et R₃ représentent indépendamment un atome d'hydrogène, un groupe alkyle en C₁ à C₂₀, cycloalkyle, aryle, aralkyle, ou alkaryle, substitué ou non substitué, ou leurs mélanges avec cette condition que R₃ n'est pas un atome d'hydrogène.

5. Le procédé selon la revendication 1, 2, 3 ou 4, dans lequel la résine acrylique est un polymère de méthacrylate de méthyle ou un copolymère méthacrylate de méthyle-monomère à insaturation éthylénique.

6. Le procédé selon la revendication 5, dans lequel le copolymère méthacrylate de méthyle-monomère à insaturation éthylénique comprend plus de 50% en poids de motifs structuraux méthacrylate de méthyle.

7. Le procédé selon la revendication 1, 2, 3 ou 4, dans lequel l'amine primaire est un composé de formule (III) suivante:
RNH₂ (III)
dans laquelle R représente un groupe alkyle en C₁ à C₂₀, cycloalkyle, aryle, aralkyle, ou alkaryle, substitué ou non substitué, ou leurs mélanges.

8. Le procédé selon la revendication 1, 2, 3 ou 4, dans lequel le solvant est choisi dans le groupe consistant en benzène, toluène, xylène, méthyléthylcétone, éthylèneglycol, diméthyléther, diglyme, dioxane, tétrahydrofuranne, diméthylformamide, diméthylsulfoxyde, diméthylacétamide, alcool méthylique, alcool éthylique, alcool isopropylique et alcool butylique, dont le point d'ébullition est de 50 à 160°C ou leurs mélanges.
